Europäisches Patentamt

(19) European Patent Office

Office européen des brevets

(11) Numéro de publication : **0 050 051**
**B1**

(12) **FASCICULE DE BREVET EUROPÉEN**

(45) Date de publication du fascicule du brevet :
18.01.84

(21) Numéro de dépôt : **81401333.0**

(22) Date de dépôt : **21.08.81**

(51) Int. Cl.³ : **H 01 L 31/02, G 02 B   7/26**

(54) **Procédé d'alignement d'une fibre optique avec un composant opto-électronique, adaptateur, et tête de couplage comportant l'utilisation du procédé.**

(30) Priorité : **23.09.80 FR 8020411**

(43) Date de publication de la demande :
**21.04.82 Bulletin 82/16**

(45) Mention de la délivrance du brevet :
**18.01.84 Bulletin 84/03**

(84) Etats contractants désignés :
**DE GB IT NL SE**

(56) Documents cités :
**EP-A- 0 015 095**
**EP-A- 0 027 070**
**FR-A- 2 387 517**

(73) Titulaire : **THOMSON-CSF**
**173, Boulevard Haussmann**
**F-75379 Paris Cedex 08 (FR)**

(72) Inventeur : **Henry, Raymond**
**Thomson-CSF SCPI 173, bld Haussmann**
**F-75360 Paris Cedex 08 (FR)**
Inventeur : **Simon, Jacques**
**Thomson-CSF SCPI 173, bld Haussmann**
**F-75360 Paris Cedex 08 (FR)**
Inventeur : **Levy, Danièle**
**Thomson-CSF SCPI 173, bld Haussmann**
**F-75360 Paris Cedex 08 (FR)**
Inventeur : **Carpentier, Jean-François**
**Thomson-CSF SCPI 173, bld Haussmann**
**F-75360 Paris Cedex 08 (FR)**
Inventeur : **Defaut, Bernard**
**Thomson-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

# Procédé d'alignement d'une fibre optique avec un composant opto-électronique, adaptateur, et tête de couplage comportant l'utilisation du procédé

L'invention concerne un procédé d'alignement d'une fibre optique faisant partie d'un tronçon fixé dans un porte-fibre ou d'un câble de transmission optique avec un composant opto-électronique. Ce problème se pose à deux niveaux :

1. A la transition de la lumière entre une diode émettrice ou réceptrice, d'une part, et d'autre part, un tronçon de fibre optique, appelé aussi parfois « fibre mélangeuse », situé dans une tête opto-électronique qui constitue le point de départ ou d'arrivée de la liaison optique proprement dite.

2. Au point de passage entre deux fibres optiques, notamment dans le cas du raccordement entre un câble de transmission optique et une tête opto-électronique.

Les fibres optiques et ces composants optoélectroniques comme définies dans le préambule de la revendication 1 sont connus du EP-A-0 015 095. L'état de la technique selon l'article 54(3) comprend une tête opto-électronique avec une partie entre le porte-fibre et l'embase, qui est constituée par un capot (EP-A-0 027 070).

La nécessité d'une très grande précision dans la réalisation de l'alignement résulte des considérations suivantes, où l'on expose également les difficultés rencontrées.

Le diamètre de la fibre de verre du câble optique est souvent très petit, soit par exemple 125 microns, de plus, le « cœur » de la fibre, seul utilisé pour la transmission effective, est par exemple de 50 microns dans les fibres dites de « télécommunications ». Il est donc nécessaire de réaliser l'alignement à quelques microns près, si possible à deux ou trois microns.

Dans une tête opto-électronique de réception, le tronçon de fibre incorporé peut avoir un diamètre de cœur supérieur à 50 microns mais il doit rester petit par rapport à la surface utile de la diode semi-conductrice, laquelle est elle-même très petite dans le cas des liaisons à très haute fréquence.

Dans une tête opto-électronique d'émission, le diamètre du cœur du tronçon de fibre doit être au plus égal, pour capter toute la lumière, au diamètre de la surface émissive de la diode électroluminescente. C'est dire que son diamètre peut être très inférieur à 100 microns.

Dans le raccordement entre un câble et une tête, la fibre optique du câble est centrée dans un embout dont le contour externe constitue une surface de référence pour positionner l'axe de la fibre. Le tronçon de fibre incorporé à la tête est centré par un porte-fibre, lui-même incorporé à la tête. Entre l'embout et le porte-fibre il existe un adaptateur.

Les solutions connues au problème de l'alignement mettent en œuvre soit des réalisations mécaniques de très haute précision, soit un système de positionnement manuel intégré au dispositif de connexion. Elles sont généralement complexes et coûteuses.

L'invention telle qu'elle est revendiquée a pour but de simplifier les moyens mis en œuvre en produisant l'alignement désiré.

Dans le cas de la tête seule, le procédé d'alignement, selon l'invention, d'une fibre optique avec un composant opto-électronique dans lequel la fibre optique est un tronçon fixé dans un porte-fibre faisant partie de la tête opto-électronique, ledit tronçon présentant du côté du composant opto-électronique une face plane d'entrée ou de sortie de la lumière, et le composant est une diode semi-conductrice fixée sur une embase et présentant une surface utile d'émission ou de réception de la lumière, est caractérisé en ce que, la tête comportant entre le porte-fibre et l'embase, une partie déformable de façon permanente, des moyens externes sont appliqués sur la périphérie de la partie déformable, en exerçant des pressions capables de produire des déformations permanentes pour contacter le porte-fibre en contrôlant l'alignement de la face plane du tronçon avec la surface utile de la diode par la quantité de lumière transmise.

Dans le cas du raccordement entre câble et tête, le procédé d'alignement, selon l'invention, d'une fibre optique avec un composant opto-électronique, dans le cas où la fibre optique constitue l'extrémité d'un câble de transmission optique, et où le composant est une tête opto-électronique, comportant une diode photoémissive ou photoréceptrice et un tronçon de fibre optique inclus dans un porte-fibre, faisant lui-même partie de la tête, est caractérisé en ce qu'on réalise un adaptateur comportant une première extrémité destinée à recevoir le câble et une deuxième extrémité destinée à recevoir le porte-fibre de la tête, ledit adaptateur comportant entre ses extrémités, une partie déformable de façon permanente, et en ce qu'après montage du câble et du porte-fibre sur l'adaptateur, on applique, sur la périphérie de la partie déformable, des moyens externes qui exercent des pressions capables de produire une ou plusieurs déformations permanentes, pour contacter la tête en contrôlant l'alignement du câble avec le tronçon par la quantité de lumière transmise.

L'invention sera mieux comprise, et d'autres caractéristiques apparaîtront, au moyen des exemples décrits ci-après, et des dessins qui l'accompagnent, parmi lesquels :

la figure 1 est une coupe schématique d'une tête opto-électronique utilisable dans l'exécution du procédé selon l'invention ;

la figure 2 représente en coupe schématique un dispositif de réglage utilisable dans l'exécution du procédé selon l'invention ;

la figure 3 est une coupe longitudinale d'un dispositif de raccordement entre câble et tête opto-électronique, utilisé selon le procédé de l'invention ;

la figure 4 est une coupe transversale du dispositif précédent.

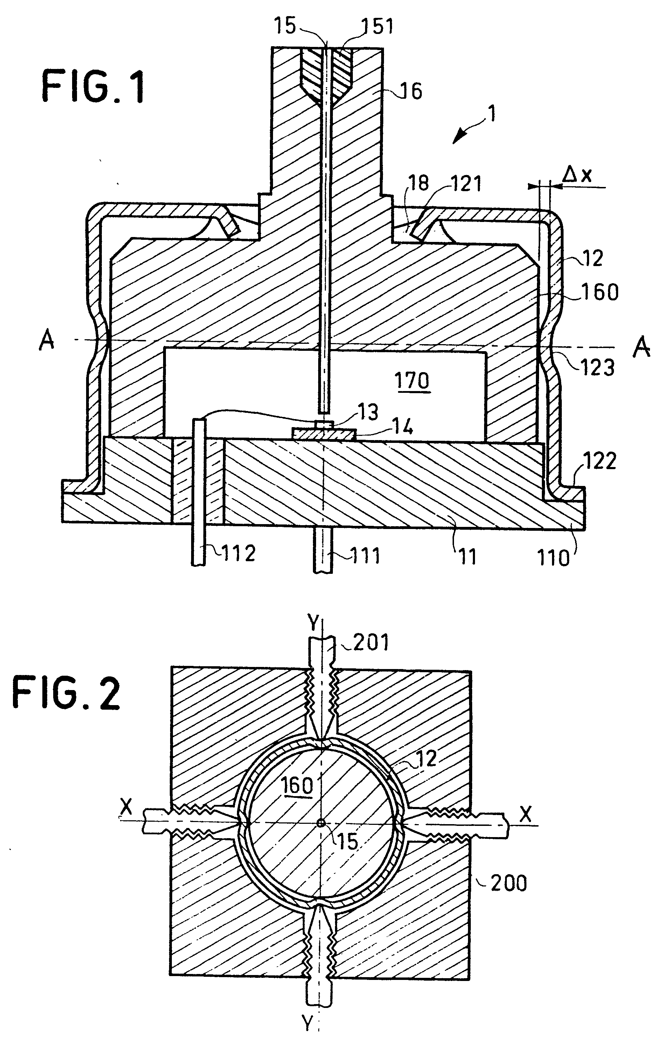

Dans le schéma de la figure 1, relatif à une tête opto-électronique, un boîtier 1, du type normalisé pour dispositif à semi-conducteur, en alliage ductile (ferro-nickel par exemple), comporte une embase 11, par exemple en alliage de fer, nickel et cobalt, de coefficient de dilatation thermique proche de celui du verre, et un capot métallique 12. L'embase est traversée par des passages isolants de connexions électriques 111 et 112, du type « à perle de verre », destinés à alimenter le composant opto-électronique de la tête. Dans le cas de la figure 1, il s'agit par exemple d'une photodiode 13 montée sur un support 14. Ce dernier est par exemple une rondelle de céramique métallisée sur deux faces opposées, ou sur la seule face qui reçoit la diode, la connexion de masse 111 étant soudée sur cette dernière face métallisée.

Dans le même schéma, on a représenté figure 1, un porte-fibre 16 dont la partie médiane comporte un épaulement 160 de diamètre légèrement supérieur au diamètre interne du capot, un jeu x étant laissé volontairement entre les pièces 160 et 12. Ce porte-fibre enserre une fibre 15, immobilisée par de la colle, résine ou soudure, notamment à la partie supérieure du porte-fibre par un dépôt 151. L'épaulement 160 comporte un évidement 170, fournissant ainsi un logement pour le composant et ses connexions, avec un espace permettant de régler au mieux le couplage du composant et de la face de sortie (ou entrée dans le cas d'une tête de réception) de la fibre optique.

La partie supérieure du porte-fibre 16 émerge de la partie supérieure du capot 12 par une ouverture centrale dont le bord 121 est incliné vers le bas. Un dépôt 18 de colle, de résine ou de soudure est déposé autour du porte-fibre pour sceller le capot sur l'épaulement 160. On décrit plus loin l'étape où s'effectue ce dépôt.

En outre l'embase 11 comporte un rebord 110, de moindre épaisseur que la partie centrale, afin de faciliter la soudure électrique du bord évasé 122 du capot 12 sur la périphérie de l'embase 11. Cette opération de soudure est décrite plus loin.

Le procédé de fabrication et de montage du porte-fibre et de l'ensemble de la tête comporte par exemple les étapes suivantes :

a) fabrication au tour du porte-fibre, comportant notamment l'usinage de l'épaulement 160, le perçage d'un orifice axial ;

b) fixation de la fibre dans la perforation centrale du porte-fibre de manière à placer l'une des faces terminales de la fibre dans le plan correspondant au couplage optimal de cette face et du composant opto-électronique ;

c) rodage et polissage de la partie supérieure du porte-fibre et de la fibre elle-même ;

d) emboutissage et perçage du capot en utilisant des moyens classiques auxquels sont adjoints des outillages adaptés aux dimensions du capot 12 ;

e) on produit des déformations permanentes 123 situées au niveau d'un plan de trace AA sur la figure 1. A cet effet, on utilise par exemple un outillage comportant un bloc 200 de forme parallélépipédique ou circulaire comportant une perforation centrale de diamètre tel que l'on puisse y loger la partie du capot 12 située au-dessus du bord 122. En outre, le bloc 200 comporte, en trois ou quatre points de sa périphérie, des taraudages recevant chacun une vis micrométrique 201. A la figure 2, on a représenté des déformations sensiblement équivalentes du capot 12 sous l'effet des vis 201, ce qui ne correspond pas au cas général où ces déformations sont différentes. En pratique, on peut produire ces déformations en agissant sur les vis en contrôlant en permanence le résultat obtenu par des essais de contrôle « en dynamique », c'est-à-dire en effectuant une transmission réelle de lumière et en mesurant la qualité de la transmission ;

f) on scelle enfin le capot 12 en utilisant des moyens de soudure comportant des électrodes façonnées pour s'adapter à la tête.

Un dépôt 18, obtenu par insertion préalable d'une préforme de soudure et partiellement fondu au cours de cette étape, achève le scellement de la tête.

On peut rendre automatique le réglage décrit à l'étape (e) en asservissant l'avance des vis micrométriques dans deux directions situées à 90° l'une de l'autre par des dispositifs sensibles à l'intensité du signal électrique détecté dans le cas d'une photodiode et du signal lumineux reçu à l'extrémité de la fibre optique dans le cas d'une diode électroluminescente.

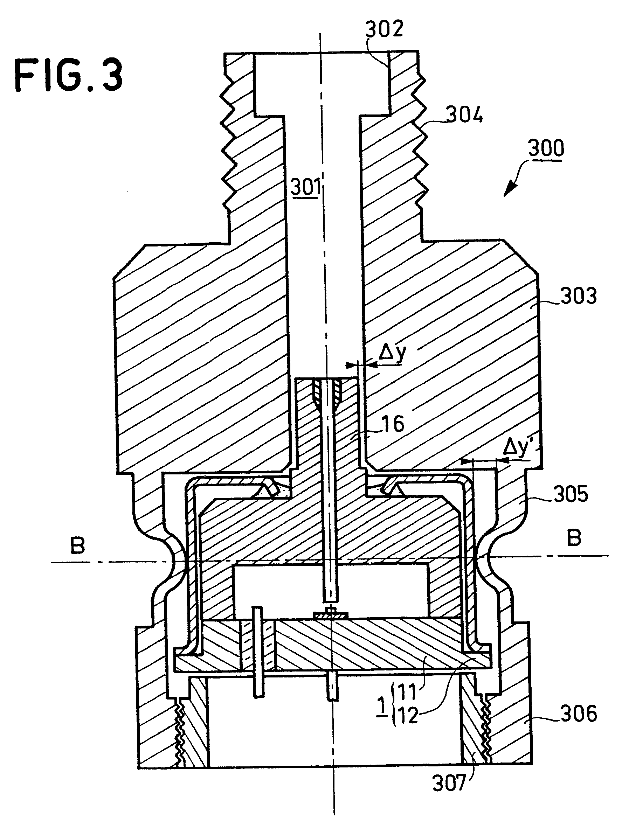

Sur la figure 3, on a représenté une tête opto-électronique 1 qui est analogue mais pas nécessairement identique à celle de la figure 1. Elle comporte un capot 11 et une embase 12. Un porte-fibre 16, émergeant du capot 12, est engagé dans la cheminée 301 d'un adaptateur 300, en ménageant un certain jeu y, par exemple de l'ordre de 30 à 60 microns. Cet adaptateur est conçu pour loger à sa partie inférieure la tête 1, et dans la partie opposée au porte-fibre 16, l'extrémité d'un câble optique (non représenté) sans ménager aucun jeu de telle sorte que la fibre optique du câble soit exactement centrée dans la cheminée 301. Celle-ci comporte en outre une partie élargie 302 destinée à loger soit un embout de câble soit l'extrémité de la gaine du câble dans le cas où l'on a dénudé celui-ci sur une partie de sa longueur pour faciliter son insertion dans l'adaptateur, soit enfin un dépôt de matériau de scellement.

L'adaptateur comporte un épaulement 303 entourant la cheminée 301 et une partie filetée 304 destinée à recevoir une bague de raccordement, dans le cas où le câble est terminé par un embout qui comporte une telle bague. En outre, du côté opposé à la partie 304, l'adaptateur comporte une jupe 305 destinée à entourer la tête 1 avec un jeu y'. La différence des diamètres et de la jupe est légèrement supérieure à la différence des diamètres du porte-fibre 16 et de la cheminée 301.

Une collerette 306 termine la jupe 305. Elle est assez large pour laisser passer l'embase 12. Une bague filetée 307 se visse dans la partie interne de la collerette 306 de manière à plaquer le capot 12 contre la partie inférieure de l'épaulement 303.

Le matériau utilisé pour la fabrication de l'adaptateur, et particulièrement de sa jupe déformable, peut être constitué par un alliage de nickel, de cuivre, de zinc (et autres additifs) désigné commercialement sous le nom d'ARCAP.

Le procédé de fabrication et de montage de la fibre et de sa tête dans l'adaptateur comporte les étapes suivantes :

a) fabrication de l'adaptateur, ce dernier comportant au moins une perforation axiale destinée à loger d'un côté le câble, sans aucun jeu, et de l'autre, avec un certain jeu, l'extrémité du porte-fibre de la tête opto-électronique ;

b) alésage de la perforation axiale de l'adaptateur de façon à ménager un jeu suffisant du côté du porte-fibre pour permettre le réglage prévu à l'étape (e) ci-après ;

c) montage de l'extrémité sur l'adaptateur en opérant de telle sorte qu'il n'y ait aucun jeu mécanique entre le câble ou son embout et la paroi interne de l'adaptateur ;

d) montage de la tête en immobilisant celle-ci dans l'adaptateur au moyen de la bague filetée de celui-ci ;

e) réglage, sous contrôle « dynamique » de l'alignement des fibres optiques du câble et de la tête en produisant des déformations durables de la jupe de l'adaptateur, au niveau d'un plan de trace BB sur la figure 3, perpendiculaire à l'axe de révolution du porte-fibre et rencontrant celui-ci dans sa partie la plus massive.

On peut utiliser un dispositif analogue à celui qui a été décrit à propos de la figure 2.

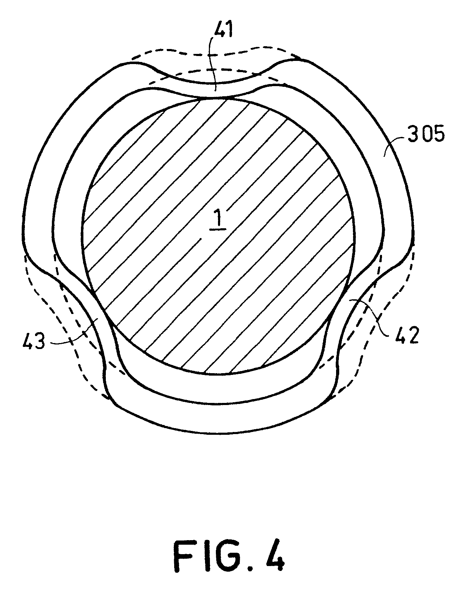

On peut aussi prévoir, en fabriquant l'adaptateur des amincissements 41, 42 et 43 dans la paroi de la jupe 305. On a représenté, figure 4, des points de moindre épaisseur situés à 120° l'un de l'autre sur le cercle de coupe de la jupe 305. On pourrait aussi en prévoir quatre disposés suivant deux diamètres à 90°.

## Revendications

1. Procédé d'alignement d'une fibre optique (15) avec un composant opto-électronique dans le cas où la fibre optique est un tronçon fixé dans un porte-fibre (16) faisant partie d'une tête opto-électronique (1), ledit tronçon présentant, du côté du composant opto-électronique, une face plane d'entrée ou de sortie de la lumière, et le composant est une diode semi-conductrice (13) fixée sur une embase (11) et présentant une surface utile d'émission ou de réception de la lumière, ledit procédé étant caractérisé en ce que, la tête (1) comportant entre le porte-fibre (16) et l'embase (11), une partie déformable (12) de façon permanente, des moyens externes sont appliqués sur la périphérie de la partie déformable (12), en exerçant des pressions capables de produire des déformations permanentes (123) pour contacter le porte-fibre (16) en contrôlant l'alignement de la face plane du tronçon avec la surface utile de la diode par la quantité de lumière transmise.

2. Procédé d'alignement d'une fibre optique avec un composant opto-électronique, dans le cas où la fibre optique constitue l'extrémité d'un câble de transmission optique, et où le composant est une tête opto-électronique (1) comportant une diode photoémissive ou photoréceptrice et un tronçon de fibre optique inclus dans un porte-fibre (16), faisant lui-même partie de la tête, ledit procédé étant caractérisé en ce qu'on réalise un adaptateur (300) comportant une première extrémité destinée à recevoir le câble et une deuxième extrémité destinée à recevoir le porte-fibre de la tête, ledit adaptateur comportant entre ses extrémités, une partie déformable (305) de façon permanente, et en ce qu'après montage du câble et du porte-fibre sur l'adaptateur, on applique, sur la périphérie de la partie déformable, des moyens externes qui exercent des pressions capables de produire des déformations permanentes (41, 42, 43) pour contacter la tête (1) en contrôlant en outre l'alignement du câble avec le tronçon par la quantité de lumière transmise.

3. Procédé suivant la revendication 1, caractérisé en ce que la partie déformable de la tête opto-électronique (1) comprise entre le porte-fibre (16) et l'embase (11) est constituée par la périphérie d'un capot (12) en alliage ductile, un certain jeu ($\Delta x$) étant aménagé entre capot (12) et porte-fibre (16) au niveau de la partie destinée à recevoir les déformations permanentes (123).

4. Procédé suivant la revendication 2, caractérisé en ce que la partie déformable de l'adaptateur (300) est une jupe (305) réalisée en alliage ductile et présente des parties amincies (41, 42, 43) en des points prédéterminés, un certain jeu ($\Delta j'$) étant aménagé entre jupe (305) et tête opto-électronique (1) au niveau des parties amincies (41, 42, 43).

5. Procédé suivant l'une quelconque des revendications 1 et 2, caractérisé en ce qu'on utilise un outillage comportant trois ou quatre vis (201) micrométriques enserrant les parties où l'on désire produire des déformations permanentes.

6. Procédé suivant la revendication 5, caractérisé en ce que l'on asservit les réglages par vis micrométriques dans deux directions situées à 90° l'une de l'autre en fonction du signal détecté par les mesures de contrôle dynamique.

7. Tête opto-électronique alignée par le procédé selon la revendication 1, caractérisée en ce que la partie déformable (12) de cette tête (1) a subi une ou plusieurs déformations permanentes (123) sur sa périphérie.

8. Adaptateur entre câble optique et composant opto-électronique, aligné par un procédé selon la revendication 2, caractérisé en ce qu'il comporte une jupe (305) déformable en des points prédéterminés de sa périphérie, ladite jupe étant capable de loger le composant, et des moyens étant prévus pour serrer le composant dans son logement dans l'intérieur de l'adaptateur.

## Claims

1. A method for aligning an optical fiber (15) with an optoelectronic component for the case that the optical fiber is a fiber section mounted in a fiber support (16) forming a part of an optoelectronic head (1), the fiber section having on the side of the optoelectronic component a plane light input or light output surface and wherein the optoelectronic component is a semiconductor diode (13) mounted on a base (11) and having a useful surface for emitting or receiving the light, characterized in that the head (1) contains between the fiber support (16) and the base (11) a permanently deformable part (12), that to the periphery of the deformable part (12) external means are mounted by exerting pressures which can cause permanent deformations (123) to contact the fiber support (16) by controlling the alignment of the plane surface of the fiber section with respect to the useful surface of the diode by means of a part of the transmitted light.

2. A method of aligning an optical fiber with an optoelectronic component for the case that the optical fiber is the end of an optical transmission cable and that the component is an optoelectronic head (1) containing a light emitting or light receiving diode and a section of the optical fiber provided in a fiber support (16) which forms a part of the head, characterized in that an adapter (300) is formed having a first end for receiving the cable and a second end for receiving the fiber support of the head, said adapter having between its ends a permanently deformable section (305), and that upon mounting the cable and the fiber support on the adapter external means are joined to the periphery of the deformable section which exert pressures which can cause the permanent deformations (41, 42, 43) to contact the head (1) by controlling the alignment of the cable with respect to the fiber section by means of the amount of the transmitted light.

3. Method according to claim 1, characterized in that the deformable part of the optoelectronic head (1) provided between the fiber support (16) and the base (11) is formed by the periphery of a cap (12) made of a ductile alloy, a certain clearance ($\Delta$x) being provided between the cap (12) and the fiber support (16) at the level of the section destined for receiving the permanent deformations (123).

4. Method according to claim 2, characterized in that the deformable section of the adapter (300) is a collar (305) made of a ductile alloy having regions (41, 42, 43) of reduced thickness at predetermined points, a certain clearance ($\Delta$j') being provided at the level of the thinner regions (41, 42, 43) between the collar (305) and the optoelectronic head (1).

5. Method according to claim 1 or 2, characterized in that a tool having three or four micrometer screws (201) is used clamping the sections at which the permanent deformations are to be produced.

6. Method according to claim 5, characterized in that the adjustments effected by means of the micrometric screws are made in two directions offset by 90° in dependence on a signal detected by dynamic control measurements.

7. Optoelectronic head aligned by means of the method according to claim 1, characterized in that the deformable part (12) of this head (1) was provided at its periphery with one or more permanent deformations (123).

8. Adapter between an optical cable and an optoelectronic component aligned by means of the method according to claim 2, characterized by a collar (305) which is deformable at predetermined points of its periphery and which can receive the component and by means for clamping the component in its recess within the adapter.

## Ansprüche

1. Verfahren zum Ausrichten einer optischen Faser (15) mit einem optoelektronischen Bauelement für den Fall, daß die optische Faser ein Faserabschnitt ist, der in einem Faserhalter (16) befestigt ist, der einen Teils eines optoelektronischen Kopfs (1) bildet, wobei der Faserabschnitt auf Seiten des optoelektronischen Bauelements eine ebene Lichteingangs- oder Lichtausgangsfläche aufweist und das optoelektronische Bauelement eine Halbleiterdiode (13) ist, die auf einem Sockel (11) befestigt ist und eine Nutzfläche zum Aussenden oder Empfangen des Lichts aufweist, dadurch gekennzeichnet, daß der Kopf (1) zwischen dem Faserhalter (16) und dem Sockel (11) ein permanent verformbares Teil (12) aufweist, daß am Umfang des verformbaren Teils (12) äußere Mittel angefügt werden, indem Drücke ausgeübt werden, die dauerhafte Verformungen (123) hervorrufen können, damit der Faserhalter (16) unter Steuerung der Ausrichtung der ebenen Fläche des Faserabschnitts auf die Nutzfläche der Diode durch einen Teil des hindurchgelassenen Lichts kontaktiert wird.

2. Verfahren zum Ausrichten einer optischen Faser auf ein optoelektronisches Bauelement für den Fall, daß die optische Faser ein Ende eines optischen Übertragungskabels bildet und daß das Bauelement ein optoelektronischer Kopf (1) ist, der eine Licht aussendende oder Licht empfangende Diode sowie einen Abschnitt der optischen Faser in einem einen Teil des Kopfs bildenden Faserhalter (16) enthält, dadurch gekennzeichnet, daß ein Adapterstück (300) gebildet wird, das ein erstes Ende zur Aufnahme des Kabels und ein zweites Ende zur Aufnahme des Faserhalters des Kopfs aufweist, wobei das Adapterstück zwischen seinen Enden einen permanent verformbaren Abschnitt (305) aufweist, und daß nach der Anbringung des Kabels und des Faserhalters am Adapterstück auf den Umfang des verformbaren Abschnitts äußere Mittel angefügt werden, die Drücke ausüben, die die dauerhaften Verformungen (41, 42, 43) hervorrufen können, damit der Kopf (1) unter Steuerung der Ausrichtung des Kabels mit dem Faserabschnitt durch die Menge des hindurchgelassenen Lichts kontaktiert wird.

3. Verfahren nach Anspruch 1, dadurch gekennzeichnet, daß das verformbare Teil des optoelektronischen Kopfs (1), das sich zwischen dem Faserhalter (16) und dem Sockel (11) befindet, vom Umfang einer Kappe (12) aus einer streckbaren Legierung gebildet ist, wobei zwischen der Kappe (12) und dem Faserhalter (16) auf der Höhe des zur Aufnahme der dauerhaften Verformungen (123) bestimmten Abschnitts ein gewisses Spiel (Δx) vorgesehen ist.

4. Verfahren nach Anspruch 2, dadurch gekennzeichnet, daß der verformbare Abschnitt des Adapterstücks (300) ein Kragen (305) aus einer streckbaren Legierung ist, der an vorbestimmten Punkten verdünnte Abschnitte (41, 42, 43) aufweist, wobei zwischen dem Kragen (305) und dem optoelektronischen Kopf (1) auf der Höhe der verdünnten Abschnitte (41, 42, 43) ein gewisses Spiel (Δj') vorgesehen ist.

5. Verfahren nach Anspruch 1 oder 2, dadurch gekennzeichnet, daß ein Werkzeug mit drei oder vier mikrometrischen Schrauben (201) verwendet wird, die die Abschnitte einspannen, bei denen die dauerhaften Verformungen erzeugt werden sollen.

6. Verfahren nach Anspruch 5, dadurch gekennzeichnet, daß die Einstellungen mittels der mikrometrischen Schrauben in zwei um 90° gegeneinander versetzten Richtungen in Abhängigkeit von einem durch dynamische Steuermessungen erfaßten Signal vorgenommen werden.

7. Optoelektronischer Kopf, der mittels des Verfahrens nach Anspruch 1 ausgerichtet ist, dadurch gekennzeichnet, daß das verformbare Teil (12) dieses Kopfs (1) an seinem Umfang eine oder mehrere dauerhafte Verformungen (123) erfahren hat.

8. Adapterstück zwischen einem optischen Kabel und einem optoelektronischen Bauelement, das mittels des Verfahrens nach Anspruch 2 ausgerichtet wurde, gekennzeichnet durch einen Kragen (305), der an vorbestimmten Punkten seines Umfangs verformbar ist und der das Bauelement aufnehmen kann, und Mittel zum Einspannen des Bauelements in seiner Ausnehmung im Inneren des Adapterstücks.

FIG.1

FIG.2

# FIG.3

301

302

304

300

303

Δy

16

Δy'

305

B — — — B

1 { 11
      12

306

307

FIG. 4